# EUROPEAN PATENT APPLICATION

(11) **EP 1 860 573 A1**
(43) Date of publication of application: **28.11.2007**
(21) Application number: 06114500.9
(22) Date of filing: 24.05.2006
(51) Int. Cl.: G06F 17/22, H04N 1/32

(54) **A scanner system for comparing two documents**

(71) Applicant: Océ-Technologies B.V., 5914 CC Venlo (NL)
(72) Inventor: Brand, Roeland K., 5706 Helmond (NL)
(74) Representative: Janssen, Paulus J. P.

(57) **Abstract**

A scanner system comprising a scanner (1) for optically scanning a document, a creating module (22) for creating a first digital document corresponding to the scanned document, a comparing module (27) for comparing the first digital document with a second digital document, a generation module (28) for generating a comparison document (75) comprising an indication of a difference between the first and the second digital document and a print engine (39) for printing the comparison document

The invention also pertains to a scanner comprising a scanner (1) for optically scanning documents, a creation module (22) for creating digital documents corresponding to the scanned documents, a comparison module (26) for comparing a first of those digital documents with a second of those digital documents, a generation module (27) for generating a comparison document (75) comprising an indication of a difference between the compared documents and an interface (24a) for operatively connecting the scanner (1) to a print engine (39) to enable printing of the comparison document (75). Also the method of comparing two documents using the scanner system or the scanner is claimed.

## Description

The invention pertains to a system for comparing documents and a method of using this system.

A commercial document comparison software application called Revline is available from PLP Digital systems. This application can compare two digital documents that have been created on a work station and highlights the differences between them. A drawback hereof is that is does not provide the user with the object of the invention.

Known from US 6,707,932 is a method of scanning a hardcopy document, transforming the scanned document into a bitmap, comparing this bitmap with a template-bitmap and computing the matches between the scanned document and the template structure. A drawback hereof is that it only allows to compare a document with a template structure.

It is an object of the present invention to provide a system for conveniently comparing documents, in particular hardcopy documents, with each other. To this end a scanner system has been devised comprising a scanner for optically scanning a document, a creation module for creating a first digital document corresponding to the scanned document, a comparison module for comparing the first digital document with a second digital document, a generation module for generating a comparison document comprising an indication of a difference between the first and the second digital document and a print engine for printing the comparison document.

This scanner system allows the user to scan a hardcopy document and to create a corresponding digital document and to compare the resulting digital document with another digital document, whereafter the comparison document can be automatically printed. The comparison document e.g. is an overlay image of both documents, wherein the differences between both documents are indicated. The scanner can be e.g. a flatbed scanner, a sheetfed scanner or a hand held scanner. The scanner comprises a creation module, e.g. a CCD array, for converting a hardcopy document into a digital document, e.g. of a bitmap format. A comparison module can identify differences between the two digital documents. Subsequently, a generation module creates a comparison document that comprises an indication of a difference between both documents.

Finally, the comparison document can be automatically printed on a print engine. The print engine may be any marking engine e.g. an electrophotographic print engine or an ink jet print engine, both monochrome or full colour.

In a further embodiment the scanner system comprises a scanner with a user interface to enable the user to control the comparison module at the scanner. In this embodiment the user can walk up to the scanner and select a 'compare drawing' button on the user interface. The user interface then guides the user through the steps of scanning the documents that he wants to compare and then the comparison document can be automatically printed on the print engine.

In another embodiment the print engine is connected to a user interface to enable the user to control the comparison module at the print engine. In an embodiment both the print engine and the user interface are part of the same printer. This allows the user to walk up to the printer and to use the user interface of the printer to control the comparison module. In this embodiment the scanner does not have to be equipped with a user interface.

In another embodiment the second digital document corresponds to an other scanned document. This is an especially useful application for comparing e.g. engineering drawings in the construction world. Engineering drawings are often revised during the construction process. Especially when relatively small amendments have been made to a drawing, it is often not easy to see the differences between the old and the new version of the drawing. The scanner can scan both versions of the drawing. Both scanned documents are converted into digital documents e.g. bitmaps of the same size and format and then every pixel can be mutually compared and subsequenty the comparison document is generated and printed.

In another embodiment the second digital document is a digitally created digital document. For example a paper engineering drawing can be scanned and converted into a digital document and be compared with e.g. a digital CAD drawing. Both documents could be automatically converted into bitmaps of the same size and format prior to being compared. Then the pixel wise comparison is carried out and the comparison document is generated and printed.

In yet another embodiment the generation module generates a comparison document comprising at least part of the first or the second digital document including the indication of the difference between the first and the second digital document. In this embodiment the comparison document could resemble an overlay image of both drawings. The matching items can be shown once and the non matching items can both be shown. When e.g. in two subsequent versions of an engineering drawing the position of a single item has been changed, the comparison document can show the latest version of the drawing and added to it the specific item as in the previous version of the drawing. The specific item as in the previous version can be shown e.g. in a lighter shade than the same item as in the latest version of the drawing as to be able to discriminate between the old and the new situation.

Optionally, the item as in the old situation might be highlighted with e.g. a red border and the item as in the new situation might be highlighted with e.g. a green border.

In yet another embodiment the scanner system comprises a digital archive for storing the digital documents. This digital archive is a memory wherein e.g. the digital documents that correspond to scanned hardcopy documents are stored. The digital archive may be located anywhere in the system, e.g. in the scanner, the printer or on the controller of the printer. In this embodiment it is possible to compare a hardcopy document with a previously scanned document that has been stored in the digital archive. The user thus can scan his hardcopy document and then select any document from the digital archive by way of the user interface and print a comparison document. It is also possible to select any two documents from the digital archive by way of the user interface and to print the comparison document.

In yet another embodiment the digital archive for storing digital documents is connected to a network comprising a workstation. This offers the opportunity to send digitally created files from the work station to the digital archive in the scanner system. The user can compare a hardcopy document with a digitally created document. The hardcopy document is scanned and the digitally created document is selected from the digital archive by way of the user interface.

The invention also pertains to a scanner for optically scanning documents comprising a creation module for creating digital documents corresponding to the scanned documents, a comparison module for comparing a first of those digital documents with a second of those digital documents, a generation module for generating a comparison document comprising an indication of a difference between the compared documents and an interface for operatively connecting the scanner to a print engine to enable printing of the comparison document. This scanner comprises all the functionality to generate a comparison document of two hardcopy documents as in the scanner system described above. The scanner has an interface to connect a print engine in order to print the comparison product. The type of interface does not form part of the present invention and could be any suitable interface e.g. a IEEE bus, a TCP/IP connector, a USB port, a serial port or a parallel port. All the embodiments that have been described above for the scanner system also apply to the scanner.

The invention also pertains to a method of comparing two documents using a scanner system or the scanner as described above.
- Figure 1: is a schematic representation of a scanner system according to the invention.
- Figure 2: is a more detailed schematic representation of the scanner system of figure 1.
- Figure 3: is a schematic representation of a scanner.
- Figure 4: is a schematic representation of a printer.
- Figure 5: is a flow chart describing a method of comparing two hardcopy documents.
- Figure 6: is a flow chart describing a method of comparing a hardcopy document with a digital document.
- Figure 7: is a schematic representation of two hardcopy documents and the corresponding comparison document as generated by the scanner system of figure 1 and 2.

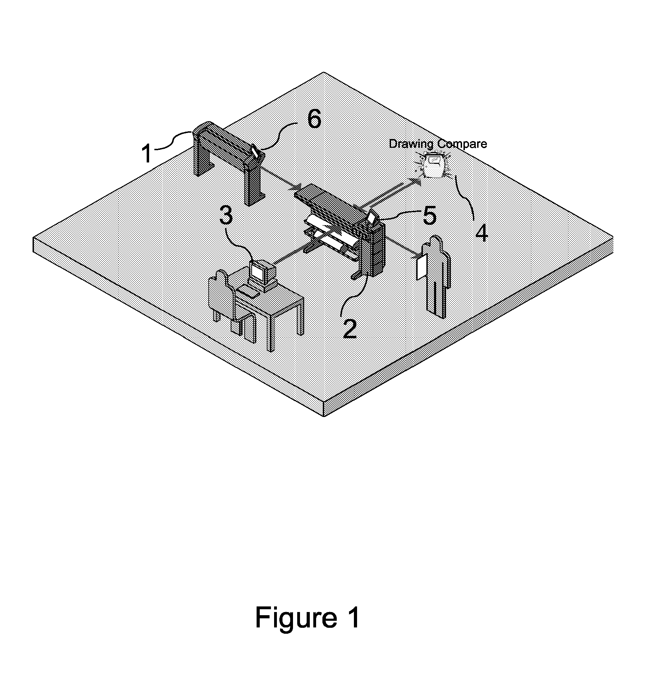

The scanner system of Figure 1 comprises a scanner 1 for optically scanning hardcopy documents and a creation module (not shown), in this case a CCD array, for converting a scanned document into a corresponding digital document. The scanner 1 is connected to a printer 2 which comprises a print engine (not shown). Both the scanner (1) and the printer (2) comprise a user interface (6) and (5) respecively which is an LCD display that communicates with the user. In this embodiment the print engine is an electrophotographic print engine or an ink jet print engine. To the person skilled in the art however it is obvious that also other types of print engines can be used.

Digital documents that are created by the creation module are sent to the printer 2 and are either directly printed by the print engine or stored in the digital archive (not shown) of the printer 2.

The printer is also connected to a network comprising a work station 3. From the work station digital documents are sent to the printer. These digital documents are also either directly printed by the print engine or stored in the digital archive of the printer 2.

When a digital document is stored in the digital archive of the printer, in order to print the document, the user selects the digital document on the user interface 5 of the printer and pushes the print button on the user interface.

The controller (not shown) of the printer runs a software application 4 for comparing two digital documents. This software application comprises a comparison module and a generation module (both not shown) for generating a comparison document. The digital documents to be compared correspond to documents that have been scanned by the scanner 1. Alternatively, one digital document is a document that corresponds to a scanned document and the other digital document is a document that has been digitally created. The comparison module (not shown) of the software application 4 makes an overlay image of the two digital documents to be compared. Each document preferably has a border that serves as a marker in order to correctly map the documents onto each other. In this embodiment the pixel information of the two digital documents is compared pixel by pixel and the matching pixels and the non-matching pixels are recorded. The digital documents that are compared are preferably bitmaps of the same size and format in order to perform this pixel wise comparison. A comparison document is created by the generation module (not shown) of the software application 4, comprising at least a part of the first or the second digital document and the differences between both documents. The matching information is represented as in both compared drawings. Information that pertains solely to the first digital document is represented in a light shade and highlighted with a red border. Information that pertains solely to the second document is represented as in the second document and highlighted with a green border. Once the comparison document has been created it is printed on the printer 2.

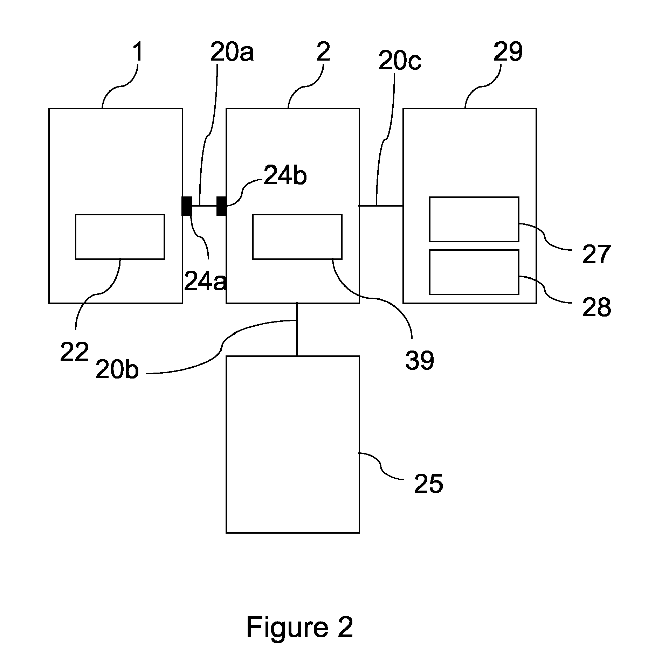

Figure 2 shows a more detailed schematic representation of the scanner system of figure 1. A scanner 1 for optically scanning a document comprises a creation module 22, in this case a CCD array for creating a digital document corresponding to the scanned document. The scanner 1 is connected to a printer 2 through the interfaces 24a and 24b and the wire 20a . The printer 2 comprises a print engine 39 and is connected to a controller 29 and a digital archive 25 through the wires 20c and 20b respectively. Digital documents that are created by the creation module 22 are sent to the comparison module 27 and stored in the digital archive 25. The comparison module 27 compares the two documents that are delivered from the creation module 22 or from the digital archive 25. The generation module 28 receives the comparison data from the comparison module 27 and generates the comparison document which is sent to the printer 2.

In this case the comparison module and the generation module are software applications that run on a standard microprocessor. In alternative embodiments they are constituted as programmable chips (EEPROM) or hardware embodiments (ASIC). In this embodiment the comparison module and the generation module run on the controller 29 of the printer 2. The physical location of the comparison and the generation module is however not confined to the controller 29. In other embodiments the modules are distributed over the system as is common in the art.

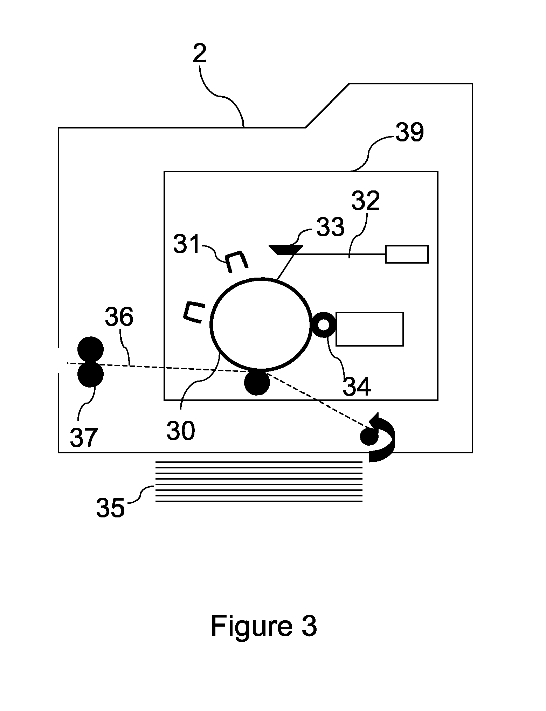

Figure 3 shows a schematic drawing of an electrophotographic printer 2. The operation of an electrophotographic printer is known from the prior art. The hart of the printer 2 is the print engine 39. The print engine 39 comprises a photoconductive drum 30. The surface of this drum is an insulator in the dark and a conductor when exposed to light. Initially, the photoconductive drum is given a total positive charge by the charge corona wire 31, a wire with an electrical current running through it. As the drum revolves, the printer shines a tiny laser beam 32 across the surface to discharge certain points, by reflecting the laser beam on a movable polygonal mirror 33. In this way, the laser "draws" the letters and images to be printed as a pattern of electrical charges i.e. an electrostatic image. After the pattern is set, the toner supply roller 34 coats the drum with positively charged toner i.e. a fine, black powder. Since it has a positive charge, the toner clings to the negative discharged areas of the drum, but not to the positively charged "background". With the powder pattern affixed, the drum rolls over a sheet of paper that has been separated from the paper stack 35 and which is moving along a belt 36 below. Before the paper rolls under the drum, it is given a negative charge by a transfer corona wire (not shown). This charge is stronger than the negative charge of the electrostatic image, so the paper can pull the toner powder away. Since it is moving at the same speed as the drum, the paper picks up the image pattern exactly. Finally, the printer passes the paper through the fuser 37, i.e. a pair of heated rollers. As the paper passes through these rollers, the loose toner powder melts, fusing with the fibers in the paper. The fuser rolls the paper to the output tray (not shown).

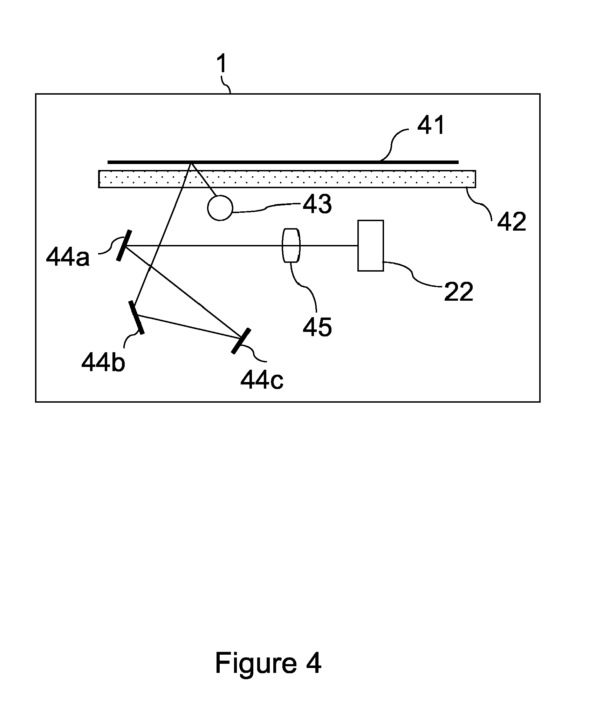

Figure 4 shows a schematic representation of a scanner 1. The operation of a scanner is known from the prior art. The core component of this scanner is the CCD array 22. CCD is a collection of tiny light-sensitive diodes, which convert light into electrons. The brighter the light that hits a single diode, the greater the electrical charge that will accumulate at that site.

The document 41 is placed on the glass plate 42 and a lamp 43 is used to illuminate the document. The lamp in this scanner is a cold cathode fluorescent lamp or xenon lamp while older scanners may have a standard fluorescent lamp. The image of the document that is scanned reaches the CCD array through a series of mirrors 44a-c and a lens 45.

The entire mechanism (mirrors, lens, and CCD array) makes up the scan head. The scan head is moved slowly across the document by a belt that is attached to a stepper motor (not shown). The scan head is attached to a stabilizer bar to ensure that there is no wobble or deviation in the pass. Pass means that the scan head has completed a single complete scan of the document.

The image of the document is reflected by a series of mirrors 44a-c. The last mirror reflects the image onto a lens 45. The lens focuses the image on the CCD array 22, where the light image is transformed into an electronic image and then stored as a digital document.

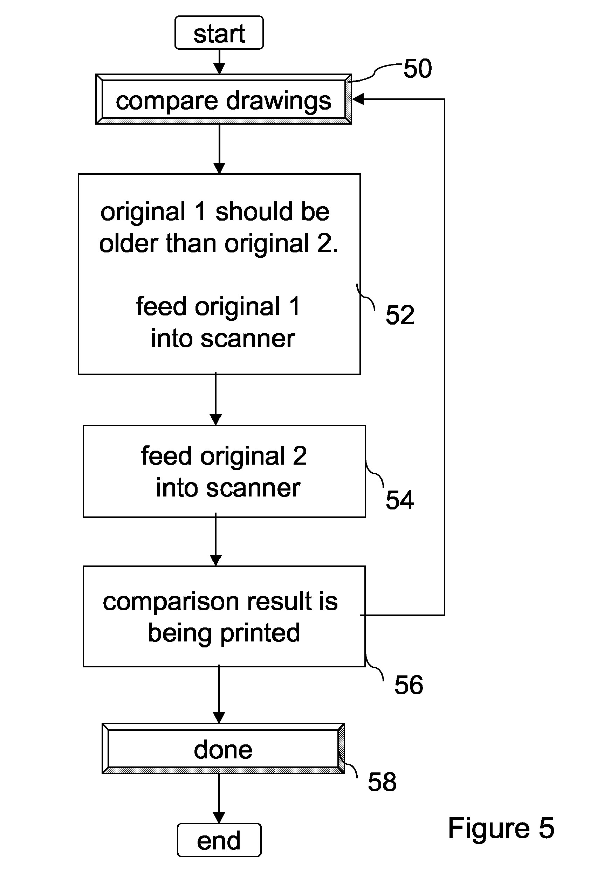

Figure 5 is a flow chart that shows the method of comparing two hardcopy documents. The user who wants to compare two hardcopy documents walks up to the scanner. On the user interface of the scanner the 'compare drawings' button 50 is pressed. The user now enters the comparison mode of the scanner. The display on the user interface automatically displays the message (52) to feed original one into the scanner.

The display also shows the message that original one should be older than original two. In this way the comparison module (not shown) can than refer to the first document as being the old situation and the second document as being the new situation.

The user now feeds the first paper document to the input nip of the scanner. The scanner senses the leading edge of the paper and when the leading edge contacts the nip, the rollers of the nip automatically pull the document into the scanner and the document is scanned and converted into a digital document. The digital document is automatically sent to the comparison module on the controller of the printer and also stored in the digital archive of the printer.

Then the display of the user interface shows the message (54) to feed original two into the scanner. The same process as described above is repeated. The second digital document is also sent to the comparison module and also stored in the digital archive.

The comparison module now compares both documents and the generation module generates the comparison document. This document is then automatically sent to the printer and printed.

The user interface of the scanner meanwhile displays the message (56) that the comparison result is being printed.

If the user wishes to compare another set of hardcopy documents, he pushes the "compare drawings" button 50 again. If not, the 'done' button 58 is pressed to exit the comparison mode.

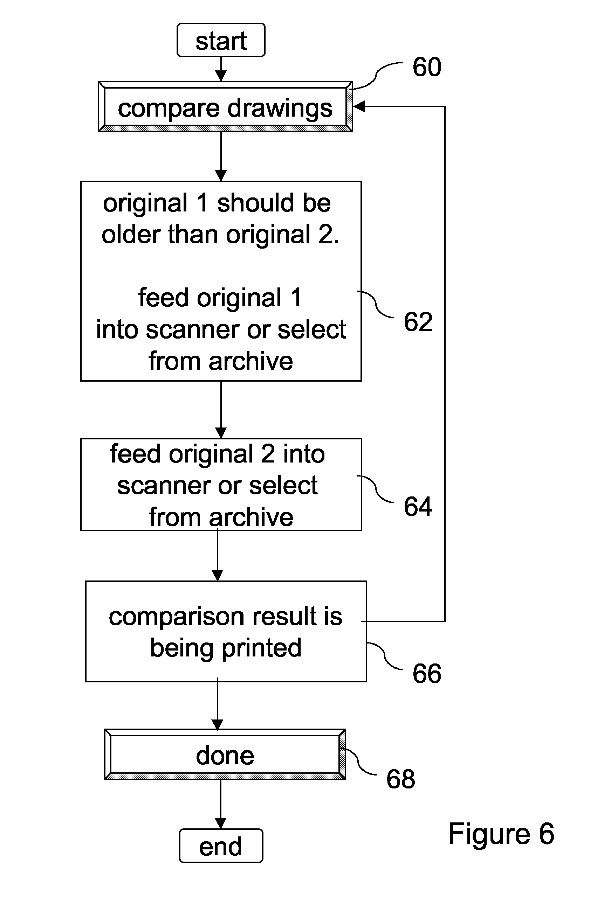

Figure 6 is a flow chart that shows the method of comparing either two hardcopy documents or one hardcopy document with a digital document.

The user who wants to compare to the two documents walks up to the scanner. On the user interface of the scanner the 'compare drawings' button 60 is pressed. The user now enters the comparison mode of the scanner. The display on the user interface automatically displays the message (62) to feed original one into the scanner or to select original one from the digital archive. The digital archive contains digital documents corresponding to hardcopy documents that have been scanned and converted earlier in time. When the digital archive is connected to a network comprising a workstation, the digital archive can also contain digitally created documents e.g. CAD drawings.

The display also shows the message (62) that original one should be older than original two. In this way the comparison module can than refer to the first document as being the old situation and the second document as being the new situation.

The user now feeds the first hardcopy document to the input nip of the scanner or selects the first document from the archive by way of the user interface.

When a paper document is fed to the scanner the scanner senses the leading edge of the paper and when the leading edge contacts the nip, the rollers of the nip automatically pull the document into the scanner and the document is scanned and converted into a digital document. The digital document is automatically sent to the comparison module on the controller of the printer and also stored in the digital archive of the printer.

Then the display of the user interface shows the message (64) to feed original two into the scanner or to select original two from the digital archive. The same process as described above is repeated. The second digital document is also sent to the comparison module and also stored in the digital archive.

The comparison module now compares both documents and the generation module generates the comparison document. This document is then automatically sent to the printer and printed.

The user interface of the scanner meanwhile displays the message (66) that the comparison result is being printed.

If the user wishes to compare another set of paper documents, he pushes the "compare drawings" button 60 again. If not, the 'done' button 68 is pressed to exit the comparison mode.

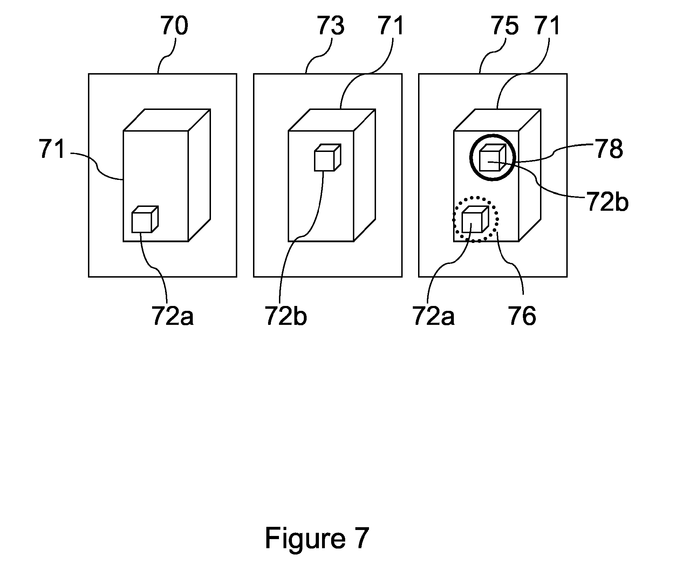

Figure 7 shows a first hardcopy document 70 and a second hardcopy document 73. Both documents show a rectangular object 71 and a cube 72. The position and the shape of the rectangular object 71 is the same in the documents 70 and 73. The position of cube 72a in document 70 is different from the position of cube 72b in document 73. A comparison document 75 as generated by the generation module 28 and printed by the printer 2 is also shown. The comparison document 75 shows the rectangular object 71 that is unaltered in the documents 70 and 73 in an unaltered way.

The comparison document 75 also shows the differences between the first and the second hardcopy document. This means that the cube 72a is shown as in document 70 and that the cube 72b is shown as in document 73. The cube 72a that pertains solely to the first hardcopy document 70 is highlighted with an interrupted line circle 76. The cube 72 b that pertains solely to the second hardcopy document 73 is highlighted with a solid line circle 78.

## Claims

1. A scanner system comprising
- a scanner (1) for optically scanning a document
- a creation module (22) for creating a first digital document corresponding to the scanned document
- a comparison module (27) for comparing the first digital document with a second digital document
- a generation module (28) for generating a comparison document (75) comprising an indication of a difference between the first and the second digital document
- a print engine (39) for printing the comparison document.

2. A scanner system according to claim 1 **characterised in that** the scanner comprises a user interface (6) to enable the user to control the comparison module (27) at the scanner (1).

3. A scanner system according to claim 1 **characterised in that** the print engine (39) is part of a printer (2), said printer (2) comprising a user interface (5) to enable the user to control the comparison module (27) at the printer.

4. A scanner system according to claim 1 **characterised in that** the second digital document corresponds to another scanned document.

5. A scanner system according to claim 1 **characterised in that** the second digital document is a digitally created digital document.

6. A scanner system according to claim 1 **characterised in that** the generation module (27) generates a comparison document (75) comprising at least a part of the first or the second digital document including an indication of a difference between the first and the second digital document.

7. A scanner system according to claim 6 **characterised in that** information in the comparison document (75) that pertains solely to the first digital document is highlighted in a first way and the information that pertains solely to the second digital document is highlighted in a second way different from the first way.

8. A scanner system according to claim 1 **characterised in that** it comprises a digital archive (25) for storing the digital documents.

9. A scanner system according to claim 8 **characterised in that** the digital archive (25) for storing the digital documents is connected to a network comprising a work station (3).

10. A scanner comprising
- a scanner (1) for optically scanning documents
- a creation module (22) for creating digital documents corresponding to the scanned documents
- a comparison module (26) for comparing a first of those digital documents with a second of those digital documents
- a generation module (27) for generating a comparison document (75) comprising an indication of a difference between the compared documents
- an interface (24a) for operatively connecting the scanner (1) to a print engine (39) to enable printing of the comparison document (75).

11. A method of comparing two documents using a scanner system according to claim 1 or a scanner according to claim 10.
